# EUROPÄISCHE PATENTSCHRIFT

(11) **EP 3 972 455 B1**
(45) Veröffentlichungstag und Bekanntmachung des Hinweises auf die Patenterteilung: **12.04.2023**
(21) Anmeldenummer: 20724817.0
(22) Anmeldetag: 07.05.2020
(51) Int. Cl.: A47C 7/40, A47C 7/38

(54) **ELEKTROMOTORISCHE VERSTELLEINHEIT ZUR NEIGUNGSVERSTELLUNG EINES STÜTZTEILS EINES SITZMÖBELS, STÜTZTEIL UND SITZMÖBEL**
ELECTROMOTOR ADJUSTING UNIT FOR ADJUSTING THE INCLINATION OF A SUPPORT PART OF AN ITEM OF SEATING FURNITURE
UNITÉ DE RÉGLAGE À MOTEUR ÉLECTRIQUE POUR RÉGLER L'INCLINAISON D'UNE PARTIE D'APPUI D'UN MEUBLE D'ASSISE, PARTIE D'APPUI ET MEUBLE D'ASSISE

(30) Priorität: 20.05.2019 DE 102019113391
(43) Veröffentlichungstag der Anmeldung: 30.03.2022
(73) Patentinhaber: Hettich Franke GmbH & Co. KG, 72336 Balingen-Weilstetten (DE)
(72) Erfinder: SAUTER, Benjamin, 72461 Albstadt (DE); SCHLAICH, Marcel, 72351 Geislingen (DE)
(74) Vertreter: Kleine, Hubertus
(86) Internationale Anmeldenummer: PCT/EP2020/062736
(87) Internationale Veröffentlichungsnummer: WO 2020/234000

(56) Entgegenhaltungen:
- WO-A2-2011/037368
- DE-A1-102013 210 226
- KR-A- 20030 060 284

## Beschreibung

Die Erfindung betrifft eine elektromotorische Verstelleinheit zur Neigungsverstellung eines Stützteils eines Sitzmöbels nach dem Oberbegriff von Anspruch 1. Die Erfindung betrifft weiterhin ein Sitzmöbel und ein Stützteil eines Sitzmöbels.

Sitzmöbel, insbesondere Polstersessel oder Teile eines Polstersofas, können Stützteile aufweisen, die neigungsverstellbar sind. Als Stützteile werden beispielsweise Kopfstützen oder Armlehnen verwendet, die durch ihre Neigungsverstellbarkeit einerseits eine ergonomische Einstellbarkeit des Möbels als auch andererseits eine Veränderbarkeit des Designs ermöglichen. Eine bequeme Verstellung ist über eine elektromotorische Verstelleinheit zu erreichen. Solche elektromotorischen Verstelleinheiten umfassen mindestens eine Antriebseinheit, die in der Regel als Linearantrieb ausgebildet ist und die über Schubstangen und/oder Hebel auf das Stützteil einwirkt, das über einen Schwenkbeschlag schwenkbar mit einem Korpuselement, z.B. einem Rückenteil, verbunden ist. Beispielsweise zeigt die Druckschrift DE 10 2013 200328 A1 eine derartige Verstelleinheit, bei der eine Kopfstütze von einem Schubantrieb über eine Gelenkhebelkette verschwenkt wird.

Bei diesen aus dem Stand der Technik bekannten Anordnungen muss entsprechend im Rückenteil ausreichend Platz vorhanden sein, um die Antriebseinheit im Korpuselement anordnen zu können. Zudem muss neben einer Montagemöglichkeit für Schwenkbeschläge auch eine Befestigungsmöglichkeit für die Antriebseinheit vorgesehen sein. Dieses erschwert insbesondere ein Nachrüsten eines elektromotorisch verstellbaren Stützteils bei einem Sitzmöbel.

Aus der Druckschrift KR 2003 0060284 A ist eine elektromotorische Verstelleinheit zur Neigungsverstellung eines Stützteils eines Sitzmöbels, insbesondere eines Autositzes bekannt, bei der eine Antriebseinheit, die einen Motor und ein Getriebe umfasst, in dem verstellbaren Stützteil selbst angeordnet ist. So kann vorteilhaft der in dem Stützteil vorhandene Platz genutzt werden und wird entsprechend nicht im Korpuselement benötigt. Die Antriebseinheit weist dabei ein drehbares Abtriebselement auf, das drehfest an einem Haltebügel befestigt ist, der das Stützteil mit dem Korpuselement des Sitzmöbels vebindet. Das Getriebe ist als Untersetzungsgetriebe mit einer Mehrzahl von ineinander greifenden Zahnrädern ausgebildet.

Die Druckschrift DE 10 2013 210 226 A1 zeigt eine ähnliche Anordnung, bei der zumindest eine Getriebestufe als ein Schneckengetriebe ausgebildet ist.

Auch aus der Druckschrift WO 2011/037368 A2 ist eine elektromotorische Verstelleinheit zur Neigungsverstellung eines Stützteils eines Sitzmöbels bekannt, bei der die Antriebseinheit im Stützteil selbst angeordnet ist. Diese Verstelleinheit ist auch für breitere Stützteile geeignet, indem zwei Getriebe mit jeweils einem drehbaren Abtriebselement vorhanden sind, wobei die Abtriebselemente drehfest an zwei verschiedenen Haltebügel befestigt sind, die das Stützteil mit dem Korpuselement des Sitzmöbels verbinden. Die beiden Getriebe sind über eine Synchronwelle miteinander gekoppelt und werden gemeinsam von einem Motor angetrieben.

Es ist eine Aufgabe der vorliegenden Erfindung, eine elektromotorische Verstelleinheit zur Neigungsverstellung eines Stützteils eines Sitzmöbels zu schaffen, die möglichst unabhängig vom Platzangebot im Korpuselement eines Sitzmöbels ist und die auf einfache Weise nachgerüstet werden kann, die für breite Stützteile geeignet ist und einen einfachen und material- und kostensparenden Aufbau aufweist. Es ist eine weitere Aufgabe, ein Stützteil und ein Sitzmöbel anzugeben, bei dem sich diese Vorteile ergeben.

Diese Aufgabe wird durch eine elektromotorische Verstelleinheit, ein Stützteil und ein Sitzmöbel mit den Merkmalen des jeweiligen unabhängigen Anspruchs gelöst. Vorteilhafte Ausgestaltungen und Weiterbildungen sind Gegenstand der abhängigen Ansprüche.

Eine elektromotorische Verstelleinheit der eingangs genannten Art weist mindestens einen Haltebügel zur Verbindung mit einem Korpuselement des Sitzmöbels auf und eine Motor- und Getriebeeinheit als Antriebseinheit mit einem Montageelement zur Befestigung des Stützteils des Sitzmöbels, wobei die Motor- und Getriebeeinheit ein drehbares Abtriebselement aufweist, das drehfest an dem mindestens einen Haltebügel befestigt ist.

Bei der elektromotorischen Verstelleinheit ist die Motor- und Getriebeeinheit somit nicht im Korpuselement angeordnet, sondern im Stützteil selbst. Sie wird mit dem Stützteil verbunden und weist ein drehbares Abtriebselement auf, das dann über den genannten Haltebügel drehfest mit dem Korpuselement gekoppelt ist. Entsprechend werden zwei Haltebügel benötigt, mit denen das Stützteil ähnlich einem manuell verstellbaren Stützteil am Korpuselement befestigt wird. Dadurch, dass sich bei Betätigung des Motors das drehbare Abtriebselement relativ zur Motor- und Getriebeeinheit dreht, jedoch dieses drehfest mit dem Haltebügel verbunden ist, führt eine Betätigung des Motors der Motor- und Getriebeeinheit zu einem Verschwenken derselben und damit des Stützteils relativ zum Korpuselement.

Bei dem Korpuselement kann es sich dabei um ein feststehendes Element des Sitzmöbels, beispielsweise ein Sitzgestell, oder auch um ein bewegliches Element, wie beispielsweise ein Rückenteil handeln, zu dem das Stützteil erfindungsgemäß in der Neigung verstellt wird.

Die Motor- und Getriebeeinheit weist einen Tragwinkel auf mit einem ersten Schenkel, an dem mindestens zwei ineinander eingreifende Zahnräder gelagert sind, die ein Untersetzungsgetriebe bilden, und einem zweiten Schenkel, der das Montageelement darstellt. Die zum Verschwenken des Stützteils benötigten hohen Drehmomente am Abtriebselement lassen sich durch das Untersetzungsgetriebe erzielen. Durch Einsatz des Tragwinkels, der gleichzeitig die Zahnräder des Untersetzungsgetriebes lagert und das Montageelement bereitstellt, wird ein einfacher und material- und kostensparender Aufbau erzielt. Bevorzugt ist parallel zu dem ersten Schenkel des Tragwinkels eine Lagerplatte angeordnet, in der die Zahnräder ebenfalls gelagert sind. Das Abtriebselement ist weiter bevorzugt an einem der Zahnräder der Motor- und Getriebeeinheit angeordnet oder ausgebildet. Die Lagerung dieses (Abtriebs-) Zahnrads stellt dann vorteilhaft auch die Schwenklagerung des Stützteils dar.

Im Rahmen der Anmeldung ist unter einem Zahnrad auch ein Zahnradsegement zu verstehen, das eine Zahnung nicht vollumfänglich, sondern nur über einen bestimmten Winkelbereich aufweist. Insbesondere das Zahnrad, an dem das Abtriebselement angeordnet oder ausgebildet ist, kann als ein Zahnradsegment gestaltet sein, da der Verschwenkwinkel des Abtriebselements in der Regel weniger als 180° oder häufig sogar weniger als 90° beträgt.

Weiter ist eine Getriebeeinheit vorgesehen, die mit der Motor- und Getriebeeinheit über eine Synchronwelle gekoppelt ist und die ebenfalls ein drehbares Abtriebselement aufweist, das drehfest an einem weiteren Haltebügel befestigt ist. Erfindungsgemäß weist auch die Getriebeeinheit einen Tragwinkel auf mit einem ersten Schenkel, an dem mindestens zwei ineinander eingreifende Zahnräder gelagert sind, die ein Untersetzungsgetriebe bilden, und einem zweiten Schenkel, der ebenfalls ein Montageelement für das Stützteil darstellt. Über die Getriebeeinheit erfolgt zum einen eine Schwenklagerung des Stützteils an einer zweiten Seite und zum anderen ein synchroner Antrieb dieser zweiten Seite. Die Verstelleinheit eignet sich damit besonders für breitere Stützteile.

Bevorzugt weisen bei einem beidseitigen Antrieb das Untersetzungsgetriebe der Motor- und Getriebeeinheit und das Untersetzungsgetriebe der Getriebeeinheit ein gleiches Untersetzungsverhältnis auf, wobei die Synchronwelle mit einer Abtriebswelle eines Antriebsmotors der Motor- und Getriebeeinheit verbunden ist. Ein gleiches Übersetzungsverhältnis lässt sich insbesondere durch im Wesentlichen gleichen Aufbau beider Getriebe erzielen, so dass vorteilhaft möglichst viele gleiche Komponenten (Zahnräder, Abtriebselement, Lagerplatte usw.) für die Motor- und Getriebeeinheit und die Getriebeeinheit verwendet werden können, wodurch Herstellungs- und Lagerkosten reduziert werden.

In einer vorteilhaften Ausgestaltung der elektromotorischen Verstelleinheit greift das Abtriebselement formschlüssig in eine entsprechende Aufnahme des Haltebügels ein. Durch den Formschluss, beispielsweise erreicht durch eine Verzahnung, können die benötigten Drehmomente zwischen dem Abtriebselement und dem Haltebügel gut und zuverlässig übertragen werden. Das Abtriebselement kann beispielsweise mit einem Außenvielzahn versehen sein, der in eine Öffnung mit einem Innenvielzahn eingesteckt wird, die an dem Haltebügel ausgebildet ist.

In einer weiteren vorteilhaften Ausgestaltung der elektromotorischen Verstelleinheit erfolgt eine Stromversorgung für die Antriebseinheit über mindestens einen der Haltebügel. Bevorzugt ist mindestens einer der Haltebügel dabei zumindest abschnittsweise hohl, wobei ein Zuleitungskabel zur Stromversorgung durch den Haltebügel geführt ist. Alternativ oder zusätzlich kann mindestens einer der Haltebügel zumindest abschnittsweise aus einem leitenden Material bestehen, so dass die Stromversorgung durch den Haltebügel selbst erfolgt.

Auf beiden Arten wird eine verdeckte Stromzufuhr zu der Antriebseinheit erreicht. Da die Antriebseinheiten von Möbelantrieben mit ungefährlicher Kleinspannung betrieben werden, ist es unproblematisch, wenn die Haltebügel selbst als Leiter eingesetzt werden. An einem oder beiden der Haltebügel kann ein Steckverbinder vorgesehen sein, über den zumindest ein Pol der Stromversorgung geführt ist. Es ist in dem Fall vorgesehen, dass der Steckverbinder einen entsprechenden Gegensteckverbinder kontaktiert, der ausgehend vom Korpuselement angesteckt wird oder der im Korpuselement bereits integriert ist, so dass beim Einstecken des Haltebügels automatisch auch die elektrische Kontaktierung hergestellt ist.

Ein erfindungsgemäßes Stützteil eines Sitzmöbels weist eine derartige elektromotorische Verstelleinheit auf und ein erfindungsgemäßes Sitzmöbel mindestens ein solches Stützteil. Es ergeben sich die im Zusammenhang mit der Verstelleinheit beschriebenen Vorteile. In einer vorteilhaften Ausgestaltung ist das Stützteil ein Kopfteil, auch Kopfstütze genannt, des Sitzmöbels. Dieses ist dann gegenüber einem Rückenteil als Korpuselement verschwenkbar. Alternativ kann auch das Stützteil auch eine Armstütze, auch Armlehne genannt, sein, die dann relativ zu einem Seitenteil als Korpuselement verschwenkbar ist. Es versteht sich dabei, dass das Korpuselement selbst zusätzlich gegenüber anderen Teilen des Sitzmöbels bewegbar sein kann. Beispielsweise kann ein Rückenteil eine Neigungsverstellmöglichkeit aufweisen und seinerseits über die elektromotorische Verstelleinheit das verschwenkbare Kopfteil tragen.

Bevorzugt ist die elektromotorische Verstelleinheit so in das Stützteil integriert, dass lediglich Abschnitte des mindestens einen Haltebügels aus einer Polsterung hervorragen. Da sich sämtliche Funktionselemente auf diese Weise innerhalb des Stützteils befinden, kann ein vorhandenes nur manuell oder gar nicht verstellbares Stützteil leicht gegen ein derart elektrisch verstellbares Stützteil ausgetauscht werden, wobei das Korpuselement nicht oder nur minimal zur Aufnahme von Stromversorgungsleitungen modifiziert werden braucht.

Der Haltebügel kann dabei verschiedenste Formen annehmen bzw. aus verschiedensten Rohmaterialien bestehen, beispielsweise eignen sich Rundrohre oder Rechteckrohre besonders für diesen Zweck. Der Haltebügel wird am Korpuselement durch geeignete Verbindungsmittel festgelegt, zum Beispiel durch Verschrauben oder durch Einstecken in entsprechende Aufnahmen.

Die Erfindung wird nachfolgend anhand von Ausführungsbeispielen mit Hilfe von Figuren näher erläutert. Die Figuren zeigen:
- Fig. 1a-c: ein Abschnitt eines Sitzmöbels mit einer Verstelleinheit in einer ersten Verstellposition in verschiedenen Ansichten;
- Fig. 2a-c: das Sitzmöbel gemäß den Fig. 1a-1c in einer zweiten Verstellposition in verschiedenen Ansichten;
- Fig. 3a-3c: verschiedene isometrische Ansichten der Verstelleinheit gemäß den Fig. 1a-2c in verschiedenen Ansichten;
- Fig. 4: eine isometrische Explosionsdarstellung der Verstelleinheit gemäß den Fig. 3a-c;
- Fig. 5: eine vergrößerte isometrische Darstellung des Haltebügels gemäß Fig. 4; und
- Fig. 6a-c: verschiedene Ansichten einer alternativen Ausgestaltung des Haltebügels gemäß Fig. 5.

In allen Figuren kennzeichnen gleiche Bezugszeichen gleiche oder gleichwirkende Elemente. Aus Gründen der Übersichtlichkeit ist in den Figuren nicht jedes Element in allen Figuren mit einem Bezugszeichen versehen.

In der Beschreibung beziehen sich Begriffe wie oben, unten, links, rechts ausschließlich auf die in den jeweiligen Figuren gewählte beispielhafte Darstellung. Lediglich die Begriffe vorne und hinten sind auf eine Ausrichtung des Sitzmöbels bezogen, wobei die vordere Seite des Sitzmöbels die dem Benutzer zugewandte Seite ist, an der sich auch eine Sitzfläche für den Benutzer befindet.

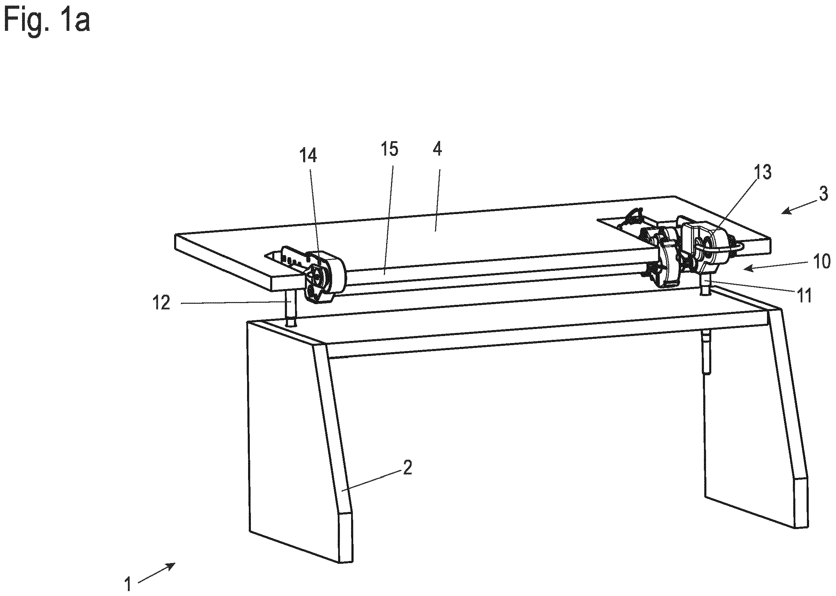

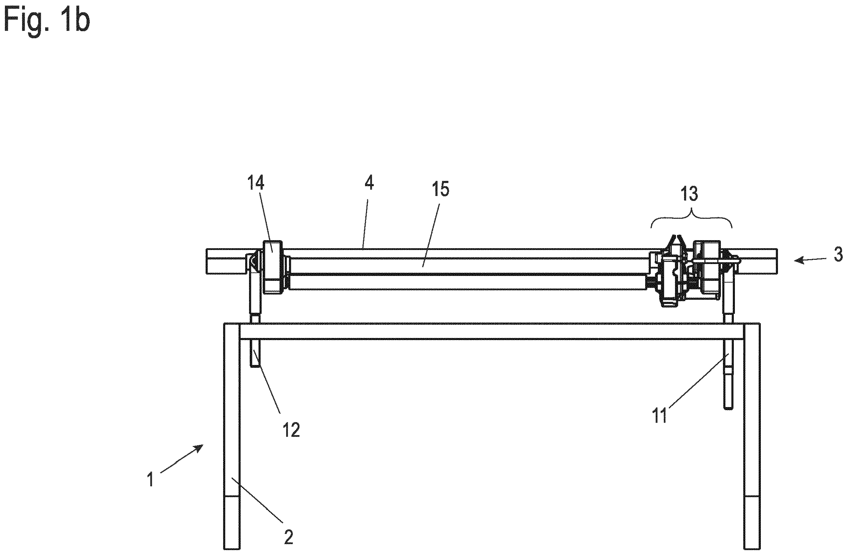

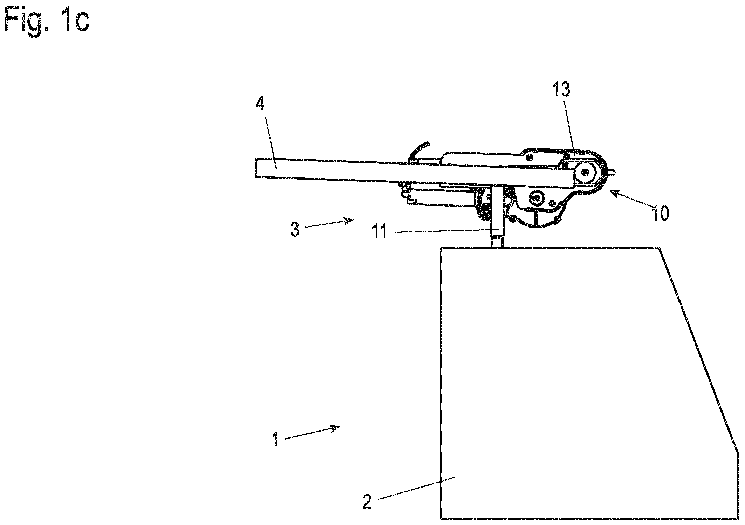

In den Fig. 1a-c ist ein Abschnitt eines Sitzmöbels 1 mit einem Rückenteil 2 und einem gegenüber diesem Rückenteil 2 verschwenkbaren Kopfteil 3, auch Kopfstütze genannt, in verschiedenen Ansichten wiedergegeben. Das Kopftteil 3 stellt somit ein verschwenkbares Stützelement des Sitzmöbels 1 dar, das an dem Rückenteil 2 als Korpuselement gelagert ist. Fig. 1a zeigt den Abschnitt des Sitzmöbels 1 in einer isometrischen Ansicht von schräg vorne, Fig. 1b zeigt eine Vorderansicht und Fig. 1c eine Seitenansicht.

In den Fig. 1a-c ist das Sitzmöbel 1 mit einem maximal nach hinten, d.h. vom Benutzer weg verschwenkten Kopfteil wiedergegeben.

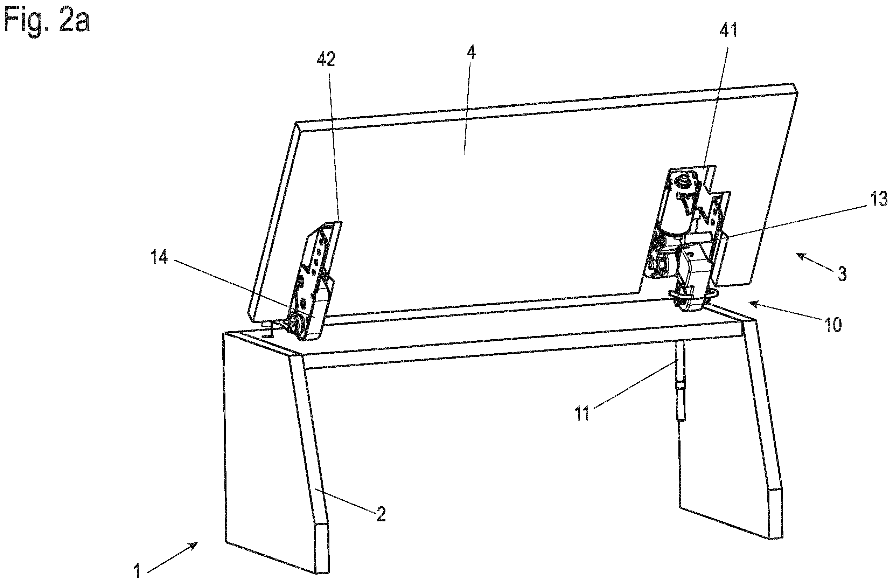

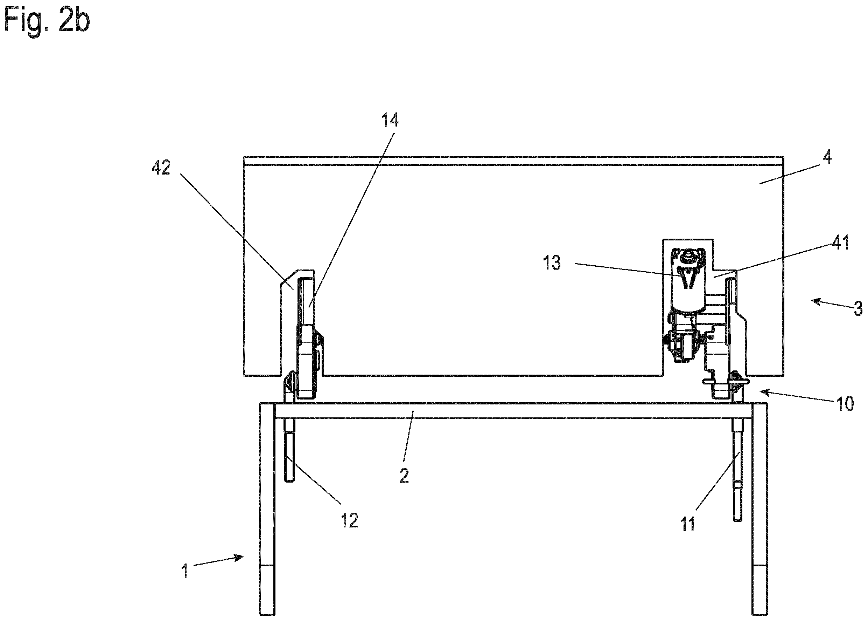

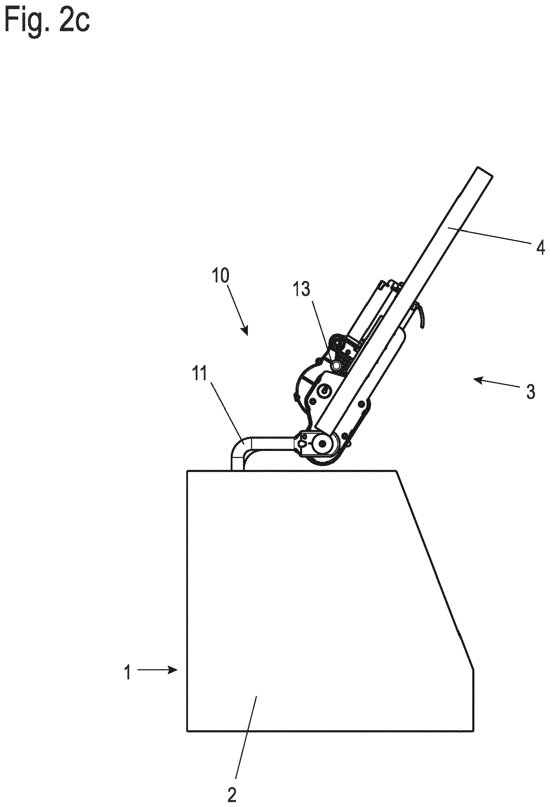

Die Fig. 2a-c geben in gleicher Art wie die Fig. 1a-c den Abschnitt des Sitzmöbels 1 wieder, wobei das Kopfteil 3 jedoch maximal nach vorne, d.h. in Richtung des Benutzers verschwenkt ist.

Ein Verschwenken des Kopfteils 3 erfolgt elektromotorisch über eine Verstelleinheit 10. Anmeldungsgemäß sind bei der Verstelleinheit 10 alle aktiven Komponenten, die zu einer Bewegung führen, insbesondere eine als Motor- und Getriebeeinheit ausgebildete Antriebseinheit im Kopfteil 3 angeordnet. Von dem Kopfteil 3 ist beispielhaft nur eine Kopfteilplatte 4 gezeigt. Auch das Rückenteil 2 ist lediglich durch miteinander verbundene Platten, die einen Rahmen des Sitzmöbels 1 bilden, wiedergegeben. Beim vollständig gefertigten Produkt sind sowohl das Rückenteil 2 als auch das Kopfteil 3 mit einer Polsterung versehen, die an den gezeigten Platten des Rückenteils 2 bzw. der Kopfteilplatte 4 befestigt ist.

Die Verstelleinheit 10 ist mit Hilfe von Haltebügeln 11, 12 an dem Rückenteil 2 befestigt. Im Rückenteil 2 sind dazu Einstecköffnungen vorgesehen, in die die Haltebügel 11, 12 eingesteckt werden können. Um eine erhöhte Stabilität der Befestigung des Kopfteils 3 am Rückenteil 2 zu erzielen, können im Rückenteil 2 Führungsrohre eingearbeitet sein, in die die Haltebügel 11, 12 eingeführt werden. Außer den eingesteckten Haltebügeln 11, 12 sind keine Komponenten der Verstelleinheit 10 im Rückenteil 2 angeordnet, weswegen die anmeldungsgemäße Verstelleinheit zum einen auch dann eingesetzt werden kann, wenn im Rückenteil 2 kein ansonsten benötigter Platz vorhanden ist. Zum anderen ist das Kopfteil 3 mit der Verstelleinheit 10 gut für Nachrüstlösungen geeignet, da keine oder nur minimale Modifikationen am Rückenteil 2 notwendig sind.

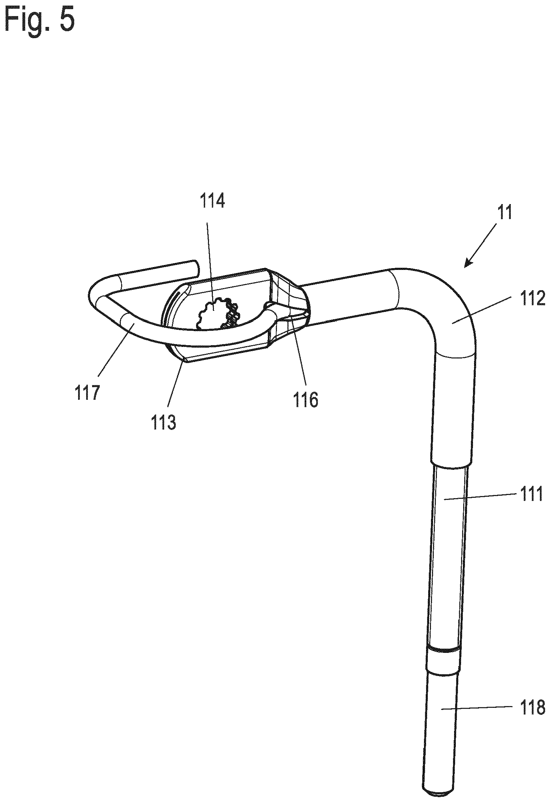

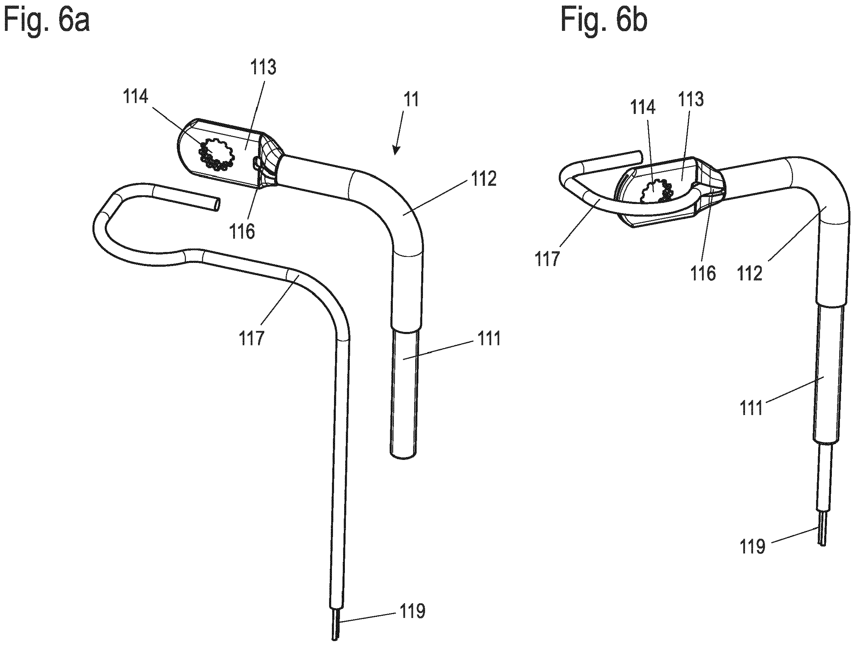

Neben ihrer Funktion als Träger des Kopfteils 3 haben die Haltebügel 11, 12 auch eine Funktion im Rahmen einer elektrischen Stromversorgung für die Verstelleinheit 10. In dem dargestellten Beispiel erfolgt die Stromversorgung über nur einen der Haltebügel, den Haltebügel 11, wohingegen der weitere Haltebügel 12 nur eine tragende Funktion hat. Details der Stromversorgung über den oder die Haltebügel 11, 12 werden im Zusammenhang mit den Fig. 5 und 6a-c noch detaillierter erläutert.

Mit dem Haltebügel 11 ist eine Motor- und Getriebeeinheit 13 schwenkbar verbunden und mit dem Haltebügel 12 eine Getriebeeinheit 14. Die Motor- und Getriebeeinheit 13 ist mit der Getriebeeinheit 14 über eine Synchronwelle 15 gekoppelt, so dass beide Einheiten 13, 14 beim Betrieb synchron verschwenken.

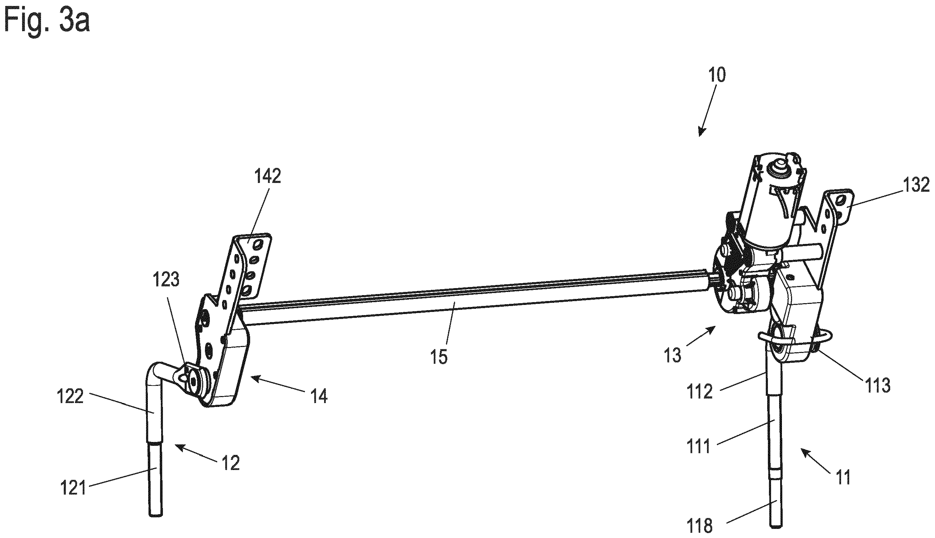

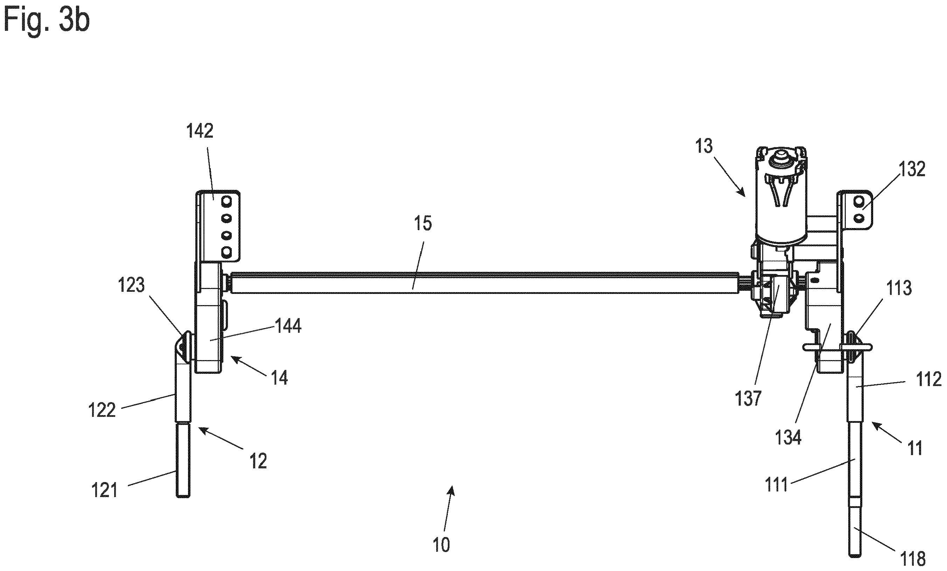

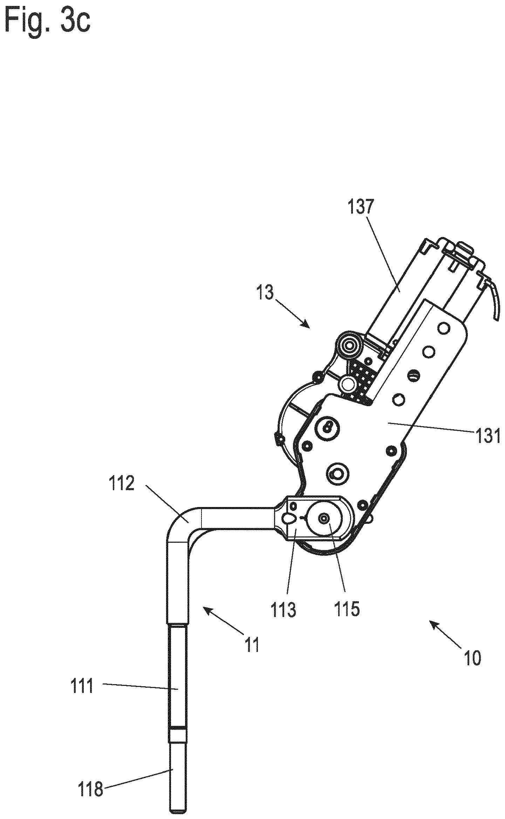

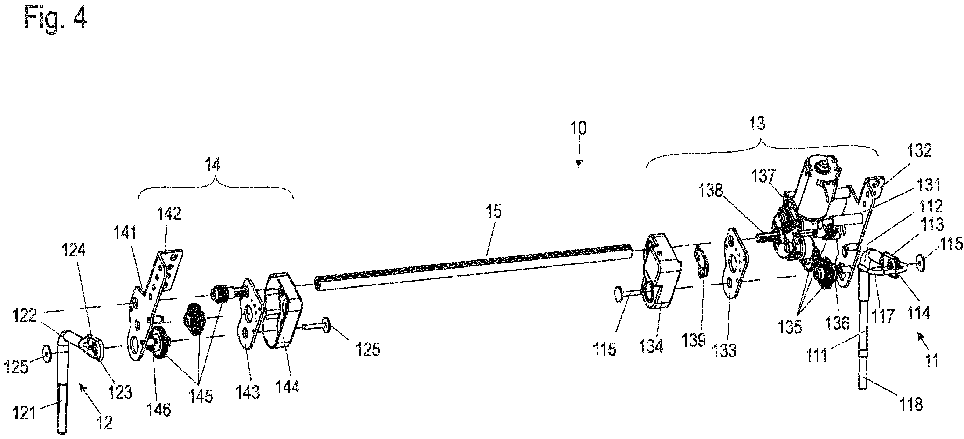

In den Fig. 3a-c ist die Verstelleinheit in gleicher Ansicht und gleichem Verschwenkwinkel dargestellt wie in den Fig. 2a-c. Die Fig. 3a-c zeigen die Verstelleinheit 10 somit vor der Verbindung mit der Kopfteilplatte 4 bzw. dem Rückenteil 2. In der Fig. 4 ist die Verstelleinheit 10 in einer isometrischen Explosionsdarstellung wiedergegeben, wobei der Betrachtungswinkel und auch der Verstellwinkel denen der Fig. 3a entsprechen. Der Aufbau der Verstelleinheit 10 wird nachfolgend mit Bezugnahme auf die Fig. 3a-3c und 4 näher erläutert.

Die Motor- und Getriebeeinheit 13 bzw. die Getriebeeinheit 14 der Verstelleinheit 10 weisen jeweils einen Tragwinkel 131 bzw. 141 auf. Der Tragwinkel 131, 141 ist jeweils bevorzugt ein Blechwinkel, der in einem Stanz- und Biegeprozess erstellt worden ist. Jeweils ein Schenkel dient als Montageelement 132 bzw. 142 an dem die Kopfteilplatte 4 beispielsweise mit Schrauben befestigt wird. Die Motor- und Getriebeeinheit 13 und die Getriebeeinheit 14 liegen dabei in der Ebene der Kopfteilplatte 4, die entsprechende Aussparungen 41 und 42 aufweist. Durch diese Anordnung der Kopfteilplatte 4 im Bezug zur Motor- und Getriebeeinheit 13 bzw. zur Getriebeeinheit 14 sind die Motor- und Getriebeeinheit 13 und die Getriebeeinheit 14 zentral im Kopfteil 3 positioniert, wodurch sie besonders gut von einer umgebenden Polsterung abgepolstert werden können.

Neben Bohrungen, die zur Befestigung der Kopfteilplatte 4 dienen, sind an den Tragwinkeln 131, 141 Öffnungen an dem anderen Schenkel zur Aufnahme von Achsstummeln von Zahnrädern 135 bzw. 145 ausgebildet. Die Tragwinkel 131, 141 dienen damit der Lagerung der Zahnräder 135, 145. An einer gegenüberliegenden Seite der Zahnräder 135, 145 ist jeweils eine Lagerplatte 133, 143 vorgesehen, die entsprechend spiegelbildliche Bohrungen aufweist, um die Zahnräder 135, 145 an der dem Tragwinkel 131, 141 gegenüberliegenden Seite zu lagern. Die Lagerplatten 133, 143 sind dabei über in den Figuren nicht näher bezeichnete Distanzelemente parallel zu den Tragwinkeln 131, 141 angeordnet und über die Distanzelemente an den Tragwinkeln 131, 141 befestigt.

Jeweils eines der Zahnräder weist ein durch den Tragwinkel 131, 141 nach au-βen tretendes Abtriebselement 136, 146 auf, das drehfest mit dem jeweiligen Haltebügel 11, 12 verbunden ist. In den Haltebügeln 11, 12 ist zu diesem Zweck ein Innenvielzahn 114, 124 ausgebildet, in den das Abtriebselement 136, 146 eingreift. Das Abtriebselement 136, 146 ist mit einer passenden Verzahnung versehen. Somit sind die Abtriebselemente 136, 146 und das entsprechende Zahnrad 135, 145, das das Abtriebselement 136, 146 trägt, drehfest mit den Haltebügeln 11, 12 verbunden. Es ist jeweils eine Kombination aus Niet und Scheibe 115, 125 vorgesehen, die das Abtriebselement 136, 146 bzw. das zugehörige Zahnrad 135, 145 auch in axialer Richtung mit dem jeweiligen Haltebügel 11, 12 verbindet. Das Abtriebselement 136, 146 und das zugehörige Zahnrad 135, 145 sind zu dem Zweck mit einer durchgehenden axialen Bohrung versehen. Anstelle der Kombination aus Niet und Scheibe 115, 125 kann auch eine Kombination aus Schraube und (gesicherter oder selbstsichernder) Mutter eingesetzt werden.

Eine Drehung des Abtriebselements 136, 146 relativ zu den Tragwinkeln 131, 141 führt entsprechend zu einem Verschwenken der Tragwinkel 131, 141 und damit der Kopfteilplatte 4 bzw. des Kopfteils 3.

Die gezeigten Zahnräder 135 bzw. 145 bilden jeweils ein untersetzendes Getriebe um die hohen, zum Verschwenken des Kopfteils 3 notwendigen Drehmomente am Abtriebselement 136, 146 bereitzustellen. Eine Gehäuseschale 134, 144 dient jeweils der Abdeckung des so gebildeten Getriebes.

Im dargestellten Beispiel ist das Getriebe dreistufig aufgebaut, mit einem Antriebszahnrad, einem Zwischenzahnrad und dem bereits genannten Abtriebszahnrad, das mit dem Abtriebselement 136, 146 gekoppelt ist bzw. einstückig mit diesem gefertigt ist. Angetrieben werden die Antriebszahnräder von einem Antriebsmotor, der im vorliegenden Beispiel seinerseits als Getriebemotor 137 ausgebildet ist. Das Getriebe des Getriebemotors 137 kann beispielsweise ein Schneckengetriebe sein, wobei auf einem Elektromotor eine Schnecke angeordnet ist, die auf ein Schneckenrad wirkt, das auf einer Abtriebswelle 138 montiert ist. Das Schneckengetriebe des Getriebemotors 137 kann in dem Fall so ausgelegt sein, dass es selbsthemmend ist, so dass das Kopfteil 3 bei nicht bestromten Getriebemotor 137 auch bei externer Krafteinwirkung nicht verschwenkt. Es kann auch eine Auslegung gewählt sein, die bei moderater Krafteinwirkung bei sachgemäßer Nutzung selbsthemmend ist, aber bei übermäßig starken äußeren Kräften zu einem Verschwenken des Kopfteils 3 führt. Dadurch wird eine Beschädigung der Verstelleinheit 10 oder ihrer Befestigung am Rückenteil 2 oder dem Kopfteil 3 entgegengewirkt.

Die Abtriebswelle 138 steht beidseitig aus dem Getriebemotor 137 hervor. Auf einer Seite ist die Abtriebswelle 138 unmittelbar mit dem Antriebszahnrad der Zahnräder 135 der Motor- und Getriebeeinheit 13 gekoppelt. Der gegenüberliegende Teil der Abtriebswelle 138 ist zunächst drehfest mit der Synchronwelle 15 verbunden, wobei diese drehfest das Antriebszahnrad der Zahnräder 135 der Getriebeeinheit 14 antreibt. Auf diese Weise ist sichergestellt, dass beide Tragwinkel 131, 141 bei Betätigung des Getriebemotors 137 synchron verfahren. Vorteilhaft werden dazu jeweils paarweise gleiche Zahnräder 135, 145 bei der Motor- und Getriebeeinheit 13 einerseits und der Getriebeeinheit 14 andererseits eingesetzt.

In der Motor- und Getriebeeinheit 13 ist zudem noch eine Endschalterplatte 139 angeordnet, die Endschalter aufweist, die betätigt werden, wenn der Tragwinkel 131 eine der beiden Endstellungen, die auch in den Fig. 1a-c bzw. 2a-c dargestellt sind, erreicht. Zum Betätigen der Endschalter der Endschalterplatte 139 können an einem der Zahnräder 135 an geeigneten Positionen Nocken angeordnet sein.

In Fig. 5 ist der Haltebügel 11 der in Fig. 4 gezeigten Verstelleinheit 10 vergrößert wiedergegeben. Wie zuvor beschrieben ist, wird der Haltebügel 11 (ebenso wie der Haltebügel 12) in eine entsprechende Aufnahme des Rückenteils 2 eingesteckt. Zu diesem Zweck weist der Haltebügel 11 einen Einsteckabschnitt 111 auf, der einen etwas kleineren Durchmesser hat als der folgende Trägerabschnitt 112. Dieser ist bei dem dargestellten Beispiel gewinkelt ausgebildet. Je nach Geometrie des Kopfteils 3 bzw. des Rückenteils 2 und je nach Position der Aufnahmen für die Haltebügel 11, 12 kann hier jedoch auch eine insbesondere gerade oder nur leicht gewinkelte Formgebung des Trägerabschnitts 112 gewählt sein. Am freien Ende des Trägerabschnitts 112 ist eine Trägerlasche 113 ausgebildet, in der der bereits beschriebene Innenvielzahn 114 ausgebildet ist. Der gezeigte Haltebügel 11 kann in einem Stanz- und Biegeprozess vollständig aus Rohrmaterial einstückig gefertigt sein.

Wie ebenfalls zuvor beschrieben ist, erfolgt über den Haltebügel 11 die Stromzufuhr für den Getriebemotor 137 der Verstelleinheit 10. Zu diesem Zweck ist ein Zuleitungskabel 117 durch den Haltebügel 11 geführt. Im Übergangsbereich zwischen dem Trägerabschnitt 112 und der Trägerlasche 113 ist eine Öffnung 116 eingebracht, durch die das vom Getriebemotor 137 bzw. der Endschalterplatte 139 kommende Zuleitungskabel 117 in den Trägerabschnitt 112 eingeführt ist.

Beim dargestellten Ausführungsbeispiel ist am gegenüberliegenden Ende des Einsteckabschnitts 111 ein Steckverbinder 118 angeordnet, der mit dem Zuleitungskabel 117 verbunden ist. Der Steckverbinder 118 kontaktiert einen entsprechenden Gegensteckverbinder, der ausgehend vom Rückenteil 2 angesteckt wird oder der im Rückenteil 2 bereits integriert ist, so dass beim Einstecken des Haltebügels 11 der Steckverbinder 118 automatisch unmittelbar mit dem Gegensteckverbinder kontaktiert.

Der Steckverbinder 118 kann dabei mehrpolig ausgelegt sein, so dass die beiden mindestens benötigten Pole zur Versorgung des Getriebemotors 137 über den Steckverbinder 118 kontaktiert werden. In einer alternativen Ausgestaltung kann der Steckverbinder 118 auch einpolig ausgebildet sein, wobei der mindestens eine anderer benötigter Pol über den Einsteckabschnitt 111 geführt ist. Bei Fertigung des Haltebügels 11 aus einem Metallrohr durch ein Stanz- und Biegeverfahren ist der Einsteckabschnitt 111 ebenfalls aus Metall und leitend, so dass er als Leiter dienen kann. Da der Getriebemotor 137 als Niederspannungsmotor mit ungefährlicher Kleinspannung versorgt ist, ist es unproblematisch, dass der gesamte Haltebügel 11 damit auf einem Potential liegt, das auch am Getriebemotor 137 anliegt.

In dem zuvor beschriebenen Ausführungsbeispiel der Verstelleinheit 10 ist das Zuleitungskabel 117 vollständig in dem einen Haltebügel 11 verlegt. Der zweite Haltebügel 12 weist bei ansonsten gleichem Aufbau keine elektrische Funktionalität auf. Er verfügt aber ebenso über einen Einsteckabschnitt 121, einen Trägerabschnitt 122 und eine Trägerlasche 123, in der der Innenvielzahn 124 ausgebildet ist (vgl. Fig. 4).

In einer alternativen Ausgestaltung der Verstelleinheit 10 kann auch vorgesehen sein, dass jeder der Haltebügel 11, 12 eine Funktion in der elektrischen Stromversorgung ausübt. Insbesondere kann vorgesehen sein, jeden der Haltebügel 11, 12 als Leiter einzusetzen, über den ein Pol der mindestens zwei benötigten Pole zum Versorgen des Getriebemotors 137 geführt ist. Eine Spannungsdifferenz, die dann zwischen den Haltebügeln 11, 12 beim Betrieb des Getriebemotors 137 anliegt, ist auch in diesem Fall gefahrlos, da der Getriebemotor 137 nur mit Kleinspannung versorgt wird.

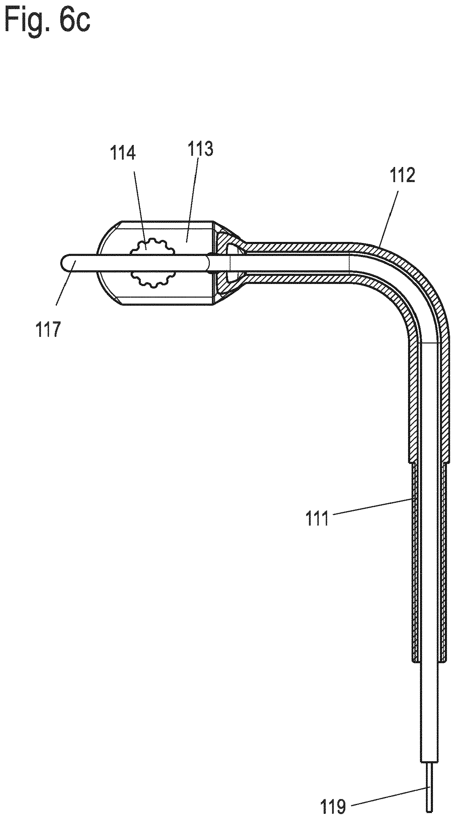

In den Fig. 6a-c ist ein zweites Ausführungsbeispiel eines Haltebügels 11 mit Zuleitungsfunktion gezeigt. Fig. 6a zeigt den Haltebügel 11 und das in diesen einzusetzende Zuleitungskabel 117 in isometrischen Darstellungen separat voneinander. Bei den Fig. 6b und 6c ist das Zuleitungskabel 117 in den Haltebügel 11 eingesetzt. Die Fig. 6b zeigt dabei den Haltebügel 11 nochmals in einer isometrischen Darstellung, wohingegen die Fig. 6c den Haltebügel 11 in einer Schnittdarstellung wiedergibt.

Bezüglich des mechanischen Aufbaus des Haltebügels 11 in diesem Ausführungsbeispiel wird auf die Fig. 5 und das zuvor beschrieben Ausführungsbeispiel verwiesen.

Unterschiedlich ist bei dem Haltebügel 11 der Fig. 6a-c, dass sich an den Einsteckabschnitt 111 kein integral mit dem Haltebügel 11 ausgebildeter Steckverbinder 118 anschließt, sondern dass das Zuleitungskabel 117 den rohrförmigen Einsteckabschnitt 111 nach unten verlässt und z.B. in einem Kabelende 119 endet, das dann durch geeignete Klemmen kontaktiert werden kann. Das Zuleitungskabel 117 kann natürlich auch entsprechend länger ausgebildet sein, so dass es ohne Zwischenkontaktierung durch das Sitzmöbel 1 geführt ist und bis zu einer Stromversorgungs- bzw. Steuereinrichtung reicht, die hier nicht dargestellt ist.

In den Ausführungsbeispielen ist die Verstelleinheit 10 beispielhaft im Zusammenhang mit dem Kopftteil 3, das relativ zu dem Rückenteil 2 verschwenkbar ist, dargestellt. Die Verstelleinheit 10 kann ebenso zur Verstellung eines sonstigen Stützteils eines Sitzmöbels eingesetzt werden, beispielsweise einer Armlehne. In dem Fall ist ein Seitenteil des Sitzmöbels das Korpuselement, gegenüber dem die Armlehne verschwenkt wird.

### Bezugszeichen

- 1: Sitzmöbel
- 2: Rückenteil
- 3: Kopfteil
- 4: Kopfteilplatte
- 41, 42: Aussparung

- 10: Verstelleinheit
- 11: Haltebügel (mit Zuleitung)
- 12: Haltebügel (ohne Zuleitung)
- 13: Motor- und Getriebeeinheit
- 14: Getriebeeinheit
- 15: Synchronwelle

- 111, 121: Einsteckabschnitt
- 112, 122: Trägerabschnitt
- 113, 123: Trägerlasche
- 114, 124: Innenvielzahn
- 115, 125: Niet und Scheibe
- 116: Öffnung
- 117: Zuleitungskabel
- 118: Steckverbinder
- 119: Kabelende

- 131, 141: Tragwinkel
- 132, 142: Montageelement
- 133, 143: Lagerplatte
- 134, 144: Gehäuseschale
- 135, 145: Zahnrad
- 136, 146: Abtriebselement
- 137: Getriebemotor
- 138: Abtriebswelle
- 139: Endschalterplatte

## Patentansprüche

1. Elektromotorische Verstelleinheit (10) zur Neigungsverstellung eines Stützteils eines Sitzmöbels (1), aufweisend mindestens einen Haltebügel (11) zur Verbindung mit einem Korpuselement des Sitzmöbels (1) und eine Motor- und Getriebeeinheit (13) als Antriebseinheit mit einem Montageelement (132) zur Befestigung des Stützteils des Sitzmöbels (1), wobei die Motor- und Getriebeeinheit (13) ein drehbares Abtriebselement (136) aufweist, das drehfest an dem mindestens einen Haltebügel (11) befestigt ist, wobei die Motor- und Getriebeeinheit (13) einen Tragwinkel (131) aufweist mit einem ersten Schenkel, an dem mindestens zwei ineinander eingreifende Zahnräder (135) gelagert sind, die ein Untersetzungsgetriebe bilden, und einem zweiten Schenkel, der das Montageelement (132) darstellt, und wobei eine Getriebeeinheit (14) vorgesehen ist, die mit der Motor- und Getriebeeinheit (13) über eine Synchronwelle (15) gekoppelt ist und die ebenfalls ein drehbares Abtriebselement (136) aufweist, das drehfest an einem weiteren Haltebügel (12) befestigt ist, wobei die Getriebeeinheit (14) ebenfalls einen Tragwinkel (141) aufweist mit einem ersten Schenkel, an dem mindestens zwei ineinander eingreifende Zahnräder (145) gelagert sind, die ein Untersetzungsgetriebe bilden, und einem zweiten Schenkel, der ebenfalls ein Montageelement (142) für das Stützteil darstellt.

2. Elektromotorische Verstelleinheit (10) nach Anspruch 1, bei der das Abtriebselement (136) formschlüssig in eine entsprechende Aufnahme des Haltebügels (11) eingreift.

3. Elektromotorische Verstelleinheit (10) nach Anspruch 1 oder 2, bei der eine Lagerplatte (133) parallel zu dem ersten Schenkel des Tragwinkels (131) angeordnet ist, in der die Zahnräder (135) ebenfalls gelagert sind.

4. Elektromotorische Verstelleinheit (10) nach einem der Ansprüche 1 bis 3, bei der das Abtriebselement (136) an einem der Zahnräder (135) der Motor- und Getriebeeinheit (13) angeordnet oder ausgebildet ist.

5. Elektromotorische Verstelleinheit (10) nach einem der Ansprüche 1 bis 4, bei der das Untersetzungsgetriebe der Motor- und Getriebeeinheit (13) und das Untersetzungsgetriebe der Getriebeeinheit (14) ein gleiches Untersetzungsverhältnis aufweisen und bei dem die Synchronwelle (15) mit einer Abtriebswelle eines Antriebsmotors der Motor- und Getriebeeinheit (13) verbunden ist.

6. Elektromotorische Verstelleinheit (10) nach einem der Ansprüche 1 bis 5, bei der eine Stromversorgung für die Antriebseinheit über mindestens einen der Haltebügel (11, 12) erfolgt.

7. Elektromotorische Verstelleinheit (10) nach Anspruch 6, bei der mindestens einer der Haltebügel (11, 12) zumindest abschnittsweise hohl ist, wobei ein Zuleitungskabel (117) zur Stromversorgung durch den Haltebügel (11, 12) geführt ist.

8. Elektromotorische Verstelleinheit (10) nach Anspruch 6 oder 7, bei der mindestens einer der Haltebügel (11, 12) zumindest abschnittsweise aus einem leitenden Material besteht, so dass die Stromversorgung durch den Haltebügel (11, 12) selbst erfolgt.

9. Elektromotorische Verstelleinheit (10) nach einem der Ansprüche 6 bis 8, bei der mindestens einer der Haltebügel (11, 12) einen Steckkontakt (118) aufweist, über den zumindest ein Pol der Stromversorgung geführt ist.

10. Stützteil eines Sitzmöbels (1), aufweisend eine elektromotorische Verstelleinheit (10) nach einem der Ansprüche 1 bis 9.

11. Stützteil nach Anspruch 10, bei dem die elektromotorische Verstelleinheit (10) so integriert ist, dass lediglich Abschnitte des mindestens einen Haltebügels (11, 12) aus einer Polsterung hervorragen.

12. Stützteil nach Anspruch 10 oder 11, das als Kopfteil (3) des Sitzmöbels (1) ausgebildet ist und das gegenüber einem Rückenteil (2) verschwenkbar ist.

13. Sitzmöbel (1), aufweisend mindestens ein Stützteil gemäß einem der Ansprüche 10 bis 12.

## Claims

1. Electromotive adjusting unit (10) for adjusting the inclination of a support part of an item of seating furniture (1), comprising at least one mounting bracket (11) for connection to a body element of the item of seating furniture (1) and a motor and transmission unit (13) embodied as a drive unit having a mounting element (132) for fastening the support part of the piece of seating furniture (1), wherein the motor and transmission unit (13) comprises a rotatable output element (136) which is fastened in a rotationally fixed manner to the at least one mounting bracket (11) wherein the motor and transmission unit (13) comprises a support bracket (131) having a first leg on which at least two intermeshing gears (135) forming a reduction gear are mounted, and a second leg constituting the mounting element (132) and wherein a transmission unit (14) is provided which is coupled to the motor and transmission unit (13) via a synchronous shaft (15) and which also comprises a rotatable output element (136) which is fastened in a rotationally fixed manner to a further mounting bracket (12) wherein the transmission unit (14) also comprises a support bracket (141) having a first leg on which at least two intermeshing gearwheels (145) forming a reduction gear are mounted, and a second leg which also constitutes a mounting element (142) for the support part.

2. Electromotive adjusting unit (10) according to claim 1, in which the output element (136) engages positively in a corresponding receptacle of the mounting bracket (11).

3. Electromotive adjusting unit (10) according to claim 1 or 2, in which a bearing plate (133) is arranged parallel to the first leg of the support bracket (131), in which the gearwheels (135) are also mounted.

4. Electromotive adjusting unit (10) according to claim 1 to 3, in which the output element (136) is arranged or formed on one of the gearwheels (135) of the motor and transmission unit (13).

5. Electromotive adjusting unit (10) according to claim 1 to 4, in which the reduction gear of the motor and transmission unit (13) and the reduction gear of the transmission unit (14) have the same reduction ratio, and in which the synchronous shaft (15) is connected to an output shaft of a drive motor of the motor and transmission unit (13).

6. Electromotive adjusting unit (10) according to one of claims 1 to 5, in which a power supply for the drive unit is provided via at least one of the mounting brackets (11, 12).

7. Electromotive adjusting unit (10) according to claim 6, in which at least one of the mounting brackets (11, 12) is hollow at least in sections, wherein a supply cable (117) for the power supply is guided through the mounting bracket (11, 12).

8. Electromotive adjusting unit (10) according to claim 6 or 7, in which at least one of the mounting brackets (11, 12) consists at least in sections of a conductive material, so that the power supply is provided by the mounting bracket (11, 12) itself.

9. Electromotive adjusting unit (10) according to one of claims 6 to 8, in which at least one of the mounting brackets (11, 12) has a plug contact (118) via which at least one pole of the power supply is guided.

10. Support part of an item of seating furniture (1), comprising an electromotive adjusting unit (10) according to one of claims 1 to 9.

11. Support part according to claim 10, in which the electromotive adjusting unit (10) is integrated such that only sections of the at least one mounting bracket (11, 12) protrude from an upholstery.

12. Support part according to claim 10 or 11, which is formed as a head part (3) of the seating furniture (1) and which can be pivoted with respect to a back part (2).

13. Item of seating furniture (1), comprising at least one support part according to one of claims 10 to 12.

## Revendications

1. Unité de réglage à moteur électrique (10) pour régler l'inclinaison d'une partie d'appui d'un meuble d'assise (1), comportant au moins un étrier de fixation (11) pour l'assemblage à un élément de corps du meuble d'assise (1) et une unité de moteur et d'engrenage (13) servant d'unité d'entraînement et munie d'un élément de montage (132) pour la fixation de la partie d'appui du meuble d'assise (1), dans laquelle l'unité de moteur et d'engrenage (13) présente un élément de sortie rotatif (136) qui est fixé de manière solidaire en rotation à l'au moins un étrier de fixation (11), dans laquelle l'unité de moteur et d'engrenage (13) comporte une équerre de support (131) avec un premier bras sur lequel sont supportées au moins deux roues dentées (135) engrenant l'une avec l'autre qui forment un engrenage de démultiplication et avec un deuxième bras qui représente l'élément de montage (132), et dans laquelle est prévue une unité d'engrenage (14) qui est couplée à l'unité de moteur et d'engrenage (13) par un arbre synchrone (15) et qui présente également un élément de sortie rotatif (136) fixé de manière solidaire en rotation sur un autre étrier de fixation (12), dans laquelle l'unité d'engrenage (14) comporte également une équerre de support (141) avec un premier bras sur lequel sont supportées au moins deux roues dentées (145) engrenant l'une avec l'autre qui forment un engrenage de démultiplication et avec un deuxième bras qui représente également un élément de montage (142) pour la partie d'appui.

2. Unité de réglage à moteur électrique (10) selon la revendication 1, dans laquelle l'élément de sortie (136) se met en prise en correspondance de forme dans un logement correspondant de l'étrier de fixation (11).

3. Unité de réglage à moteur électrique (10) selon la revendication 1 ou 2, dans laquelle une plaque de support (133), dans laquelle les roues dentées (135) sont également supportées, est disposée parallèlement au premier bras de l'équerre de support (131).

4. Unité de réglage à moteur électrique (10) selon l'une des revendications 1 à 3, dans laquelle l'élément de sortie (136) est disposé ou formé sur l'une des roues dentées (135) de l'unité de moteur et d'engrenage (13).

5. Unité de réglage à moteur électrique (10) selon l'une des revendications 1 à 4, dans laquelle l'engrenage de démultiplication de l'unité de moteur et d'engrenage (13) et l'engrenage de démultiplication de l'unité d'engrenage (14) ont un même rapport de démultiplication et dans laquelle l'arbre synchrone (15) est relié à un arbre de sortie d'un moteur d'entraînement de l'unité de moteur et d'engrenage (13).

6. Unité de réglage à moteur électrique (10) selon l'une des revendications 1 à 5, dans laquelle l'alimentation électrique de l'unité d'entraînement passe par au moins un des étriers de fixation (11, 12).

7. Unité de réglage à moteur électrique (10) selon la revendication 6, dans laquelle au moins un des étriers de fixation (11, 12) est au moins en partie creux, un câble d'alimentation (117) pour l'alimentation électrique passant à travers l'étrier de fixation (11, 12).

8. Unité de réglage à moteur électrique (10) selon la revendication 6 ou 7, dans laquelle au moins un des étriers de fixation (11, 12) se compose au moins en partie d'un matériau conducteur, de sorte que l'alimentation électrique passe par l'étrier de fixation (11, 12) lui-même.

9. Unité de réglage à moteur électrique (10) selon l'une des revendications 6 à 8, dans laquelle au moins un des étriers de fixation (11, 12) présente un contact enfiché (118) par lequel passe au moins un pôle de l'alimentation électrique.

10. Partie d'appui d'un meuble d'assise (1), comportant une unité de réglage à moteur électrique (10) selon l'une des revendications 1 à 9.

11. Partie d'appui selon la revendication 10, dans laquelle l'unité de réglage à moteur électrique (10) est intégrée de telle manière que seules des parties de l'au moins un étrier de fixation (11, 12) dépassent d'un rembourrage.

12. Partie d'appui selon la revendication 10 ou 11, qui est conformée comme un appuie-tête (3) du meuble d'assise (1) et qui peut pivoter par rapport à une partie de dossier (2).

13. Meuble d'assise (1) comportant au moins une partie d'appui selon l'une des revendications 10 à 12.
